# EUROPEAN PATENT SPECIFICATION

(11) **EP 3 828 515 B1**
(45) Date of publication and mention of the grant of the patent: **21.12.2022**
(21) Application number: 20209694.7
(22) Date of filing: 25.11.2020
(51) Int. Cl.: G01F 15/00

(54) **DEVICE TO BE APPLIED IN CORRESPONDENCE OF A PASSAGE OF A FLUID**
VORRICHTUNG, DIE GEMÄSS EINES DURCHFLUSSES EINES FLUIDS ANGEWENDET WIRD
DISPOSITIF À APPLIQUER DANS LA CORRESPONDANCE D'UN PASSAGE DE FLUIDE

(30) Priority: 26.11.2019 IT 201900022212
(43) Date of publication of application: 02.06.2021
(73) Proprietor: Pietro Fiorentini S.p.A., 36057 Arcugnano (VI) (IT)
(72) Inventor: FERRARI, Mauro, 20088 ROSATE (MILANO) (IT); VIANELLO, Mario, 20088 ROSATE (MILANO) (IT)
(74) Representative: Braidotti, Andrea

(56) References cited:
- US-A1- 2010 302 025
- US-A1- 2015 102 940
- US-A1- 2016 351 028
- US-A1- 2018 234 748

## Description

The present invention relates to a device to be applied in correspondence with a passage of a fluid, in particular of gas or water or oil or other liquids in general. Preferably, said device is suitable for being applied in correspondence with the end section of a gas passage, in particular of the type intended to act as an integrity seal for the closure of said gas passage and, preferably, to isolate said closure from the external environment.

Currently, gas distribution companies, in particular natural gas, are suffering significant economic losses mainly due to illegal and unauthorized consumption.

In particular, these situations mainly occur when the users, previously disconnected from the gas distribution network, are then reconnected to that network in an illegal way and without giving appropriate notice to the company that manages the gas distribution network.

In fact, in most cases, the supply of gas to the users is interrupted due to the non-fulfillment, by the operators of these users, of the related legal obligations envisaged at a regulatory or contractual level, for example by not paying the related bill, manipulating the gas meter, etc. In particular, in these cases, the gas distribution company has the right to disconnect the user, which means - from a technical point of view - removing the gas meter and the pressure regulator, and close and seal the corresponding end of the gas supply (delivery) piping.

However, after this disconnection, the gas distribution company has no legal authority to enter the property in order to verify whether the end of the supply pipe, which had previously been closed and sealed, is intact or whether there have been any manipulation and tampering.

Furthermore, it should also be considered that there is an illegal market for reconnecting previously disconnected users to the gas distribution network. In particular, in this context, pressure regulation solutions are sometimes used which do not guarantee safe operation and which are not suitable for the particular application and, as such, constitute a safety hazard.

To date, in the presence of these situations of unauthorized/illegal reconnection of previously disconnected users, the distribution companies do not have any concrete evidence or evidence to be able to initiate legal proceedings against the operators of these users.

For example, consider that, in Hungary alone, in 2017 there were approximately 125,000 users who were disconnected from the gas distribution network. If even just 5% of these users were to be illegally reconnected to the distribution network, and assuming an average gas consumption of about 2000m³ per year, the resulting loss for the gas distribution company would be around 4 million euros per year.

Currently, no solution is available to prevent and/or detect such situations of illegal reconnection of previously disconnected gas consumers.

In view of this, there is therefore the need to have a device available that the gas distribution company can install within the private property of the disconnected user and that at the same time can detect an illegal reconnection to the gas distribution network., thus providing appropriate and concrete evidence and evidence to be able to take legal action.

US2016/0351028 describes a device for detecting tampering at a gas or water user. In particular, this device acts as a meter for the respective user and also comprises sensors (such as accelerometers and a digital compass) to detect the position variation of the meter and a microprocessor which receives, processes and/or transmits the position variations detected by said sensors to thus identify potential tampering events of the meter.

US2010/0302025 describes an alarm system to be associated with an object and which is provided with means (such as accelerometers and gyroscopes) to detect the movement of said object and to then transmit a corresponding signal.

The purpose of the invention is to propose a device to be applied in correspondence with the end section of a passage of a fluid, in particular of gas or water or oil or other liquids in general, which allows to detect and/or signal a tampering, damage or alteration of the device itself and/or of the closure carried out at the outlet of said passage and which, in particular, detects tampering, damage or alteration of the device and/or closure aimed at illegally reconnecting a fluid supply pipe to a user.

Another purpose of the invention is to propose a device that allows to detect and/or signal an attempt to tamper with, damage or alter the device itself and/or the closure made at the outlet mouth of a fluid passage, in particular of gas or water or other liquid in general.

Another object of the invention is to propose a device which also isolates the closure and/or the outlet of said passage of a fluid, in particular of gas or water or other liquid in general from the external environment, and at the same time acts as a seal of integrity of the closure of said passage.

Another purpose of the invention is to propose a device that makes tampering and/or alteration of the closure made at the outlet of a duct for the passage of a fluid, in particular gas or water or other liquid in general more difficult and/or disincentives the reconnection to a pipe that had previously been disconnected from a corresponding user.

Another object of the invention is to propose a device that also acts as a monitoring "on the field" *device(on-field)* for the passage duct of a fluid, in particular gas or water or other liquid in general, on which is installed.

Another purpose of the invention is to propose a device that also acts as a sensor to detect environmental parameters, for example relative to the fluid and/or other useful parameters (for example the temperature) of the external/internal environment, in correspondence with the section terminal of a fluid passage duct.

Another object of the invention is to propose a device which also acts as a fluid leak detector in correspondence with the end section of a duct for the passage of said fluid.

Another object of the invention is to propose a device which itself defines/constitutes a closure of the outlet mouth of a passage of a fluid, in particular of gas or water or other liquid in general.

Another object of the invention is to propose a device which also defines a further sealing closure for the fluid that comes out of said passage and which, in particular, defines a closure which is additional to the one provided directly in correspondence with the outlet mouth of said passage.

Another object of the invention is to propose a device which can be installed and assembled quickly and simply, as well as without the need to have and/or use dedicated tools.

Another object of the invention is to propose a device that can be installed in correspondence with the end section of a fluid passage even by unskilled personnel.

Another object of the invention is to propose a device which also has high safety standards, in particular in terms of fluid tightness, in particular gas or water or other liquid in general.

Another object of the invention is to propose a device which can be manufactured simply, quickly and at low costs.

Another object of the invention is to propose a device which is an improvement and/or alternative to any other traditional solutions.

Another purpose of the invention is to propose a device that can be used as proof/evidence of an attempted tampering and/or alteration carried out on the end section of a duct for the passage of a fluid, in particular of gas or water or other liquid in general.

Another purpose of the invention is to propose an infrastructure for detecting, monitoring and/or signaling tampering, alteration or damage to the closure made at the outlet of a passage of a fluid, in particular of gas or water or other liquid in general, and that, in particular, detects tampering, alteration or damage aimed at illegally reconnecting a fluid supply duct to a user, a pipe that had previously been disconnected from a corresponding user.

Another object of the invention is to propose an infrastructure for detecting the environmental parameters in correspondence with a plurality of ducts for the passage of a fluid, in particular in correspondence with the end sections of said ducts.

All these objects, either alone or in any combination thereof, and others that will result from the following description are achieved, according to the invention, with a device as defined in claim 1 and by an infrastructure as defined in claim 15.

In particular, the present invention relates to a device (2) to be applied in correspondence with a passage (3) of a fluid, such as gas, water, oil or other liquid in general, preferably in correspondence with the end section (4) of a passage (3) of a fluid, said device comprises a containment body (100) which is configured to be closed and/or wrapped around said passage (3) and, inside said containment body (100), are housed:
- at least one sensor (102) for detecting movements and/or vibrations of said containment body (100),
- at least one sensor (103) for detecting variations in the angular orientation of said containment body (100),
- at least an electronic processing unit (101) which is electronically connected to said sensors (102, 103) and which is configured to receive the data detected by said sensors, said data being then intended to be used by said electronic processing unit ( 101) and/or by an external electronic unit (200) to identify tampering with said containment body (100),
- wireless connection means (108) of said electronic processing unit (101) with at least one external electronic unit (200).

The present invention is further clarified hereinafter in some of its preferred embodiments reported for purely illustrative and non-limiting purposes with reference to the attached drawing tables, in which:
- Figure 1: shows a perspective view of a device according to the invention,
- Figure 2: shows a vertical section of the device of fig. 1,
- Figure 3: shows the device of fig. 1,
- Figure 4: shows an exploded view of the device of fig. 1,
- Figure 5a: shows in vertical section a piece of the casing of the device of fig. 1,
- Figure 5b: shows in plan the piece of fig. 5a,
- Figure 6a: shows in vertical section the other piece of the casing of the device of fig. 1,
- Figure 6b: shows in plan the piece of fig. 6a,
- Figure 7a: shows in vertical section the cap of the device of fig. 1,
- Figure 7b: shows a plan view of the cap of fig. 7a,
- Figure 8a: shows a side view of a different embodiment of the closure device according to the invention,
- Figure 8b: shows a different side view of the device of fig. 8a,
- Figure 9: shows a vertical section of the device of fig. 8a,
- Figure 10: shows a view obtained according to section XX of fig. 8a,
- Figure 11: shows an exploded view of the device of fig. 8a,
- Figure 12: shows it exploded in a different perspective view,

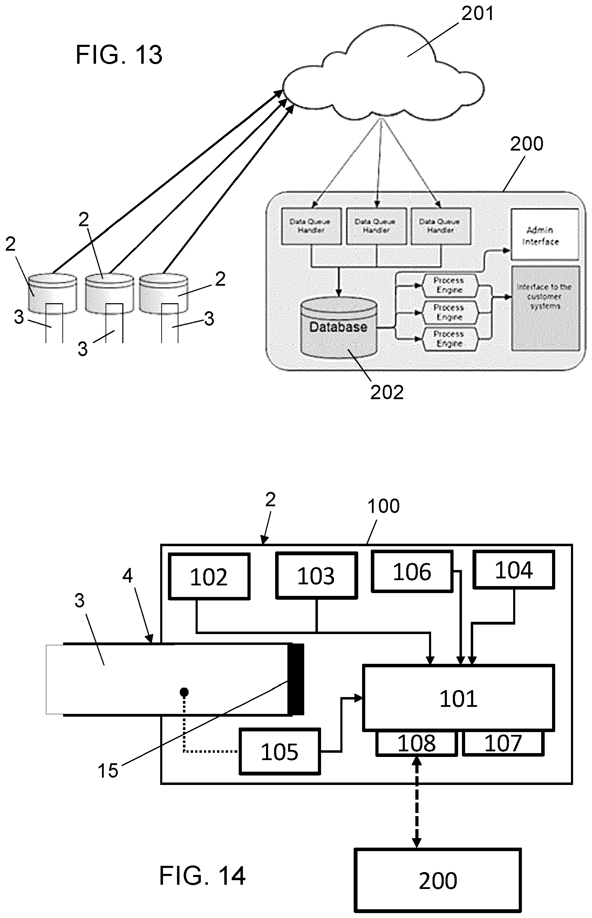

- Figure 13: shows a schematic view of a monitoring infrastructure according to the invention,
- Figure 14: shows a schematic view of a device according to the invention,
- Figure 15: shows a diagram of the data flow on the three axes of the accelerometer, with which the device is provided, following three impacts made along the "Y" axis of the device itself,
- Figure 16: shows a diagram of the data flow on the three axes of the accelerometer and on the three axes of the gyroscopic sensor, with which the device is provided, in the event of tampering with the body of said device.

As can be seen from the figures, the device 2 to be applied in correspondence with a passage 3 of a fluid, in particular of gas or water or oil or other liquids in general, preferably of an end section 4 of said passage, comprises a containment body - indicated as a whole with the reference number "100" - which is configured to be closed/wrapped around said fluid passage 3, preferably around said end section 4. Preferably, as described in more detail below, the containment body 100 it is made up of at least two pieces joined together. Preferably, the containment body 100 is configured to be fixed, preferably hung, to said end section 4.

The installation and use of the device 2 in correspondence with a gas passage 3 is described below, however it is understood that the same device 2 can also be installed and/or used in correspondence with the end section of a duct for the passage of a liquid, in particular of water, preferably of a duct for delivering water to a user.

The containment body 100 is configured to be crossed by the end section 4 of the gas passage 3 and so that the outlet 10 of said end section 4 is entirely housed inside said containment body 100.

The device 2 comprises an electronic processing unit 101 which is housed inside the containment body 100 of the device 2. Preferably, said processing unit 101 comprises a processor.

Advantageously, said processing unit 101 is configured to also act as a control and command unit, and preferably also for storage, for said device 2.

The device 2 comprises:
- at least one sensor 102 for detecting the movements and/or vibrations of the containment body 100;
- at least one sensor 103 for detecting variations in the angular orientation of the containment body 100.

Conveniently, said at least one sensor 102 for detecting the movements and/or vibrations of said device comprises an accelerometer, preferably with three axes (ie the three axes X, Y and Z orthogonal to each other).

Conveniently, said at least one sensor 103 for detecting variations in angular orientation comprises a gyroscopic sensor, preferably with three axes (ie the three axes X, Y and Z orthogonal to each other) and/or a magnetometer for measuring the magnetic induction vector in order to detect/reconstruct the orientation of the device in space.

Preferably, the accelerometer and/or the gyroscopic sensor and/or the magnetometer are made using MEMS technology (ie "Micro Electro-Mechanical Systems").

Conveniently, said at least one sensor 102 for detecting movements and/or vibrations and said at least one sensor 103 for detecting changes in angular orientation are mounted and housed inside the containment body 100 of the device 2 and are installed and/or electronically connected to the electronic processing unit 101.

Preferably, said processing unit 101 comprises a microcontroller or microprocessor which is mounted in an electronic board 32 which is in contact with the internal walls of the containment body 100 and/or with internally protruding portions 34 and integral with/integrated in said body 100. Preferably, said at least one sensor 102 for detecting movements and/or vibrations and said at least one sensor 103 for detecting changes in angular orientation are mounted on said electronic board 32.

Advantageously, the device 2 can also comprise at least one sensor 105, for example for temperature and pressure, for detecting parameters of the gas through passage 3.

Advantageously, the device 2 can also comprise at least one sensor 104, for example for temperature and/or pressure and/or humidity and/or acoustic noise, to detect parameters of the environment in which the device is installed.

Advantageously, the device 2 can also comprise at least one sensor 106 configured to detect the concentration of harmful gases (for example methane, propane or carbon monoxide) in the ambient air and/or in the containing body of the device.

Conveniently, said sensors 104, 105 and/or 106, respectively to detect parameters of the environment and/or of the gas and/or the concentration of harmful gases, are housed inside the containment body of the device 2 and are mounted and/or electronically connected to the electronic processing unit. In particular, in this case, the interior of the containment body 100 may not be hermetically sealed and, in particular, an opening passage can be provided to allow the atmosphere of the external environment to enter the containment body 100, to thus reach the aforesaid sensors.

Conveniently, said processing unit 101 is configured to process the data detected by the sensors 102 and 103, and preferably also by the sensors 104, 105 and/or 106.

The device 2 also comprises, inside said containment body 100, storage means 107 which can be connected and/or implemented in the processing unit 101. Conveniently, said storage means 107 are configured to store, at least temporarily, the data detected by the sensors and/or possibly processed by said processing unit 101.

The device 2 also comprises connection means of the wireless type 108 with at least an external electronic unit 200 to thus allow data transmission, preferably data exchange, between the processing unit 101 of the device 2 and the external electronic unit 200.

Preferably, these wireless connection means 108 can be configured for short range or remote data transmission. Preferably, these wireless connection means 108 can be configured to perform both data transmission towards the external electronic unit 200 and data reception from said external electronic unit 200, thus operating as a transceiver.

Preferably, said wireless connection means 108 use radio waves, for example through mobile radio networks for mobile communication (for example GPRS, UMTS, LTE, NB-IoT), or computer networks (for example WPAN for Bluetooth or WLAN for wi-fi networks), or even satellite networks.

Preferably, said external electronic unit 200 comprises a remote unit.

Conveniently, the external electronic unit 200 is configured - preferably according to a scalar architecture - to receive and manage the data sent by the unit of each device 2.

Preferably, the external electronic unit 200 comprises at least one processor, such as for example a real or virtual remote server and/or a cloud system.

Preferably, the data transfer between each device 2 and the external electronic unit 200 can take place according to the TCP/IP transport protocol provided in the internet connection 201.

Advantageously, the data transfer between each device 2 and the external electronic unit 200 can take place according to a traditional client-server architecture that uses, for example, the TCP/IP or HTTP (HyperText Transfer Protocol) transfer/communication protocol. Preferably, this transfer/communication protocol is made secure, i.e. it is, for example, of the HTTPS type, using an encrypted connection for example according to the TLS (Transport Layer Security) or SSL (Secure Sockets Layer) cryptographic protocols.

Preferably, the transfer/communication protocol is of the UDP (User Datagram Protocol) type where the security layer is managed at the network level (for example at the APN level, Access Point Name) and at the application level (for example using GMAC algorithms 128-bit AES).

Conveniently, the external electronic unit 200 comprises a processor configured to process the received data and then store them in an organized manner within a database 202 with which the external electronic unit itself is provided.

Conveniently, the processing unit 101 of each device 2 is configured to receive the data which have been detected from the vibration/movement sensors 102 and for the variation of the angular orientation 103 and which are then intended to be used by said electronic processing unit 101 and/or by the external electronic unit 200 to identify a tampering with the containment body 100. In particular, tampering with the containment body 100 means any breakage and/or alteration and/or damage to one or more pieces that, joined together, define said containment body, as well as any circumstance/situation in which, in general, the integrity seal function of said containment body ceases. Conveniently, tampering with the containment body 100 also means the removal of the containment body 100 from the gas passage 3, and in particular from the end section 4 of said passage, in which it is installed and/or any circumstance/situation in which the containment body is out of use, preferably permanently.

Conveniently, the processing unit 101 of each device 2 comprises a processor configured to carry out a pre-processing of the data. Preferably, this pre-processing involves processing/analyzing the data collected by the sensors in a predefined time window (for example from about 1 to 30 seconds, preferably of about 10-30 seconds) to decide whether or not an event has occurred. which identifies a potential tampering of the containment body 100 of the corresponding device 2, and for which it is therefore appropriate to send an alarm signal and/or the corresponding data to the external electronic unit 200, preferably in order to carry out a more detailed processing.

Advantageously, a software loaded and executed in the external electronic unit 200 can be configured to process the received data in real time, and possibly stored in the database 202, over a wider time window so as to identify by the sensors 102 and 103, and preferably also by the sensors 104, 105 and/or 106, provided in the device 2 further variables that fall within the detected values.

Advantageously, once - on the basis of the data coming from the sensors 102 and 103, and preferably also 104, 105 and/or 106, provided in each device 2 - an event has been identified that identifies a potential tampering of the containment body 100 of a device 2, the external electronic unit 200 sends a corresponding signal and/or message and/or warning to the display modules associated with said external electronic unit 200 and/or with further electronic devices provided in the vicinity of the device of which the containment body is tampered with and/or damaged.

The processing unit 101 of each device 2 can be configured to perform (complete or partial) local processing of the data detected by the sensors 102 and 103 in order to identify an anomalous event that potentially or effectively identifies an attempt to tamper with the containment body 100 of the corresponding device 2. In particular, for this purpose, the processing unit 101 is configured to:
- carry out a pre-processing of the data in order to identify an anomalous event that can potentially identify an attempt and/or actual tampering with the device,
- send, in the event that an anomalous event is thus identified, a corresponding alarm signal to the external electronic unit 200.

Advantageously, moreover, in the event that an anomalous event is thus identified, the processing unit 101 of the corresponding device 3 is configured to send to the external electronic unit 200 also the data detected by the sensors 102 and 103 (i.e. the raw and not pre-processed data) to thus allow said external electronic unit 200 to carry out a second/further processing and analysis.

Advantageously, the processing unit 101 of each device 2 can be configured to send the data detected by the sensors 102 and 103 to the external electronic unit 200 and it is then the external electronic unit 200 itself that is configured to perform a data processing received in order to identify an anomalous event that can potentially identify an attempt and/or actual tampering with the containment body 100 device 2. Conveniently, the external electronic unit 200 is then configured to signal and/or send, in the case in which an actual tampering with the device is thus identified, a corresponding alarm to other units and/or appliances.

Advantageously, the processing unit 101 of each device 2 can be configured to send, by means of the wireless connection means 108, automatically and periodically - that is, according to a determined frequency - at least one predefined signal to the external electronic unit 200, to communicate thus that the containment body 100 of the corresponding device 2 is mechanically intact, is operating correctly and/or has not been tampered with. Conveniently, the processing unit 101 of each device 2 is configured in such a way as to identify, on the basis of the data received from the sensors 102, 103 with which the device itself is provided, an event which potentially or actually can identify an attempt and/or effective tampering with the device and, in this case, interrupts the generation and/or sending to said external electronic unit 200 of said predefined signal which, in conditions of normal and correct operation (i.e. in the absence of an anomalous event), is sent automatically and periodically. Conveniently, the external electronic unit 200 is configured so as to generate an alarm and/or signal in the event of failure to receive the aforementioned signal which is periodically sent by each device 2.

Advantageously, the processing unit 101 of each device 2 can be configured to store in said storage means 107 the data as detected by the sensors 102, 103 (and possibly also by the sensors 104, 105 and/or 106) and/or pre-processed. Conveniently, in this case, the data stored in this way are read and collected periodically by a device, preferably portable, to which they are transmitted by means of the wireless connection means 108, in this case preferably short-range, of which the device 2 is appropriately provided. Basically, in this case, the processing unit 101 of each device 2 functions as a data logger, data which is then read and transmitted - for example via Bluetooth connection (for example "walk-by" or "Drive-by") - to an external device or to an external electronic unit 200 for their processing.

Advantageously, the processing unit 101 of each device 2 is configured to perform a first processing and analysis of the data detected by the sensors 102, 103 (and possibly also by the sensors 104, 105 and/or 106), while the external electronic unit 200 is configured to carry out a second and further processing, more precise and complex, of the raw data and/or of the data already pre-processed by the unit 101 of each device, and this in order to identify if there was actually/really or not a tampering with the containment body 100 of the device 2 installed in correspondence with the end section 4 of a gas passage 3. In particular, the second and further processing carried out at the external electronic unit 200 is aimed at avoiding false alarms, thus discriminating an event representative of an actual tampering of the containment body 100 of the device 2 from an event in which there is instead was only an attempt to tamper with or harmless movement of the containment body 100.

Furthermore, the external electronic unit 200 can conveniently be configured to implement automatic learning algorithms and procedures to carry out said further processing of the data received from each device 2 installed "in the field" in correspondence with a gas passage 3, preferably around the end section 4 of said passage.

Conveniently, moreover, the external electronic unit 200 can be configured to carry out a processing aimed at identifying any correlations between the data coming from various devices 2 and/or between various events.

Advantageously, the processing unit 101 is configured so as to acquire/sample the signals detected by the sensors of the device - and in particular of the sensors 102 and 103 respectively arranged to detect the movements and/or vibrations of the containment body 100 and to detect the variations in the angular orientation of said body 100 - according to a first basic acquisition/sampling frequency (preferably of about 5-50 Hz, for example of about 12.5 Hz), thus obtaining a series of data representative of the quantities detected by said sensors.

Advantageously, the processing unit 101 is configured so that, upon the occurrence of a trigger event, the acquisition/sampling frequency increases, thus passing to a second acquisition/sampling frequency (preferably of about 25-150 Hz, for example of about 50Hz) which is higher than said first basic acquisition/sampling frequency, thus increasing the quantity of acquired data. In particular, therefore, the device 2 can operate in two modes/conditions: a first standard and default condition, operating at a lower frequency of acquisition/sampling of the data detected by sensors 102 and 103, and a second mode/condition, which it is automatically activated only when a trigger event occurs and operates at a higher acquisition/sampling frequency of the data detected by the sensors 102 and 103. Conveniently, the processing unit 101, even if with different acquisition/sampling frequencies, always acquires (ie even before a trigger event) the data detected by sensors 102 and 103.

Advantageously, the data detected with said second and higher acquisition/sampling frequency, which is triggered by the trigger event, are then sent to the external electronic unit 200, to then carry out further processing on the data.

Conveniently, the data detected with the first acquisition/sampling frequency are not sent to the external electronic unit 200 and/or are not stored in said storage means 107, while only the data detected with said second and higher acquisition/sampling frequency, which is triggered by the trigger event, are then sent to the external electronic unit 200, to then carry out further processing on the data themselves, and/or are stored in said storage means 107.

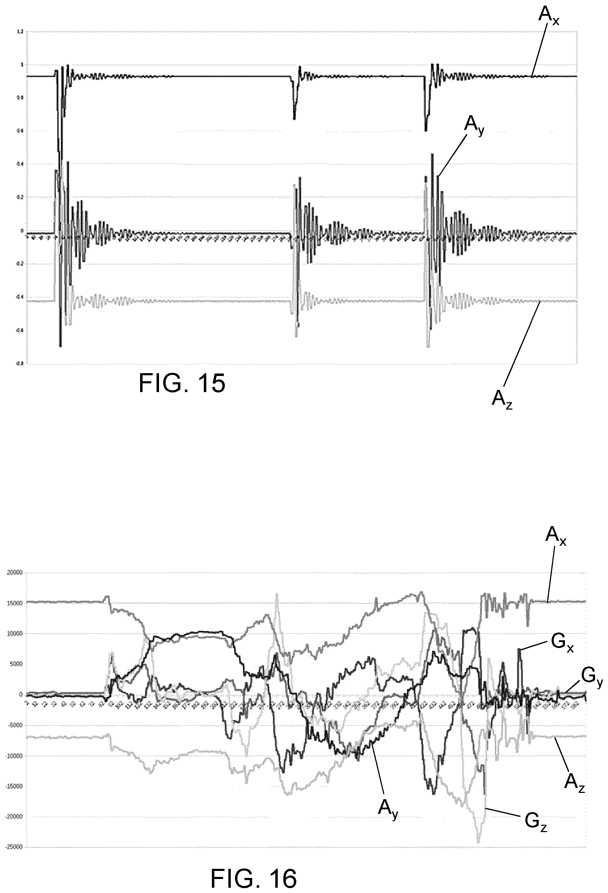

Conveniently, said trigger event can be identified for example by comparing one or more data, which have been detected by the sensors 102 and/or 103 with the basic acquisition/sampling frequency, with a predefined threshold value. Preferably, accelerometer data is used to identify a trigger event. For example, the diagram of fig. 15 shows the trend of the data Ax, Ay and Az, for the three axes X, Y and Z orthogonal to each other, detected by the three-axis accelerometer 102 (with which device 2 is provided) in the face of three consecutive collisions, but temporally spaced, sustained by the containment body 100 device 2 and directed along the Y axis.

Advantageously, the processing unit 101 of each device 2 and/or the external electronic unit 200 are configured to process the data Ax, Ay and Az detected by the three-axis accelerometer 102 and the Gx, Gy and Gz data detected by the three-axis gyroscopic sensor 103 (see fig. 16) in order to identify an event of actual tampering with the containment body 100 of the device, and to generate and/or send in this case a corresponding alarm signal and/or to interrupt (as specified above) the transmission of at least one predefined, automatic and periodic signal to the external electronic unit 200.

More in detail, for this purpose, in the processing unit 101 of each device 2 and/or preferably in the external electronic unit 200, a program is installed and executed which is configured for:
- detect and store, at the time of installation of the device 2 on the end section 4 of the gas passage 3, the corresponding values of the accelerometer 102 and of the gyroscopic sensor 103 for each axis X, Y and Z, thus obtaining the initial data Axᵢₙᵢₜ, Ayᵢₙᵢₜ, Azᵢₙᵢₜ, Gxinit, Gyᵢₙᵢₜ, Gzᵢₙᵢₜ,
- at each sampling instant in time "i", the data of the accelerometer 102 and of the gyroscopic sensor 103 are detected for each axis X, Y and Z, thus obtaining the data Axi, Ayi, Azi, Gxi, Gyi, Gzᵢ, and, suitably in order to identify a suspicious event, the following operations are preferably carried out:
- calculate the difference, for each X, Y and Z axis, between each data detected at instant "i" and the corresponding initial data, thus obtaining the following data DAx = (Axi - Axᵢₙᵢₜ₎), DAy = (Ayi - Ayᵢₙᵢₜ₎), DAz = (Azi - Azᵢₙᵢₜ₎), DGx = (Gxi - Gxᵢₙᵢₜ₎), DGy = (Gyi - Gyᵢₙᵢₜ₎), DGz = (Gzi - Gzᵢₙᵢₜ₎) and/or between each data detected at the instant "i" and the corresponding data at the previous instant "i-1", thus obtaining the following data DAx = (Axi - Axᵢ₋₁₎), DAy = (Ayi - Ayᵢ₋₁₎), DAz = (Azi - Azᵢ₋₁₎), DGx = (Gxi - Gx₋₁₎), DGy = (Gyi - Gyᵢ₋₁₎), DGz = (Gzi - Gzᵢ₋₁₎); preferably, the calculation of this difference can be carried out only if the data detected at instant "i" is different with respect to the corresponding initial data and/or the corresponding data at the previous instant "i-1";
- occurs, if the absolute value of at least one of said data DAx, DAy, DAz, DGx, DGy, DGz, as calculated above, is greater than at least one predefined threshold value; preferably, for the data relating to the accelerometer 102 a threshold value A_{LIMIT} is provided to thus verify whether abs(DAx)> A_{LIMIT} or if abs(DAy)> A_{LIMIT} or if *abs*(DAz)> A_{LIMIT}; while, for the data relating to the gyroscopic sensor 103, a threshold value G_{LIMIT} is provided to thus verify if abs(DGx)> G_{LIMIT} or if *abs*(DGy)> G_{LIMIT} or if *abs*(DGz)> G_{LIMIT}; suitably, a different threshold value Acould be provided_{LIMIT} and/or G_{LIMIT} for each of the three axes X, Y and Z,
- only in the event of a positive outcome of this check, a corresponding counter "C" is increased by one unit,
- the counter "C" thus increased is compared with a predefined DECISION_LIMIT limit value and, only when the C counter is greater than said DECISION_LIMIT predefined limit value, it is generated and/or send a corresponding signal, preferably an alarm, and/or is interrupted (as specified above) the transmission of at least one predefined, automatic and periodic signal to the external electronic unit 200.

Advantageously, moreover, thanks to the presence of sensors 104, 105 and 106, the device 2 according to the invention defines a integrated and compact module to detect the environmental parameters of the zone/area in which the device itself is installed and/or to detect some quantities and/or characteristics/properties of the gas that passes through said end section 4 in which the device itself is installed.

Conveniently, the invention also comprises an infrastructure 250 for monitoring the condition of effective/correct closure carried out on a plurality of end sections 4 of gas passages 3. In particular, the infrastructure 250 comprises a plurality of devices 2 according to the invention, each of which is installed at an end section 4 of a gas passage 3, preferably at a gas delivery duct which has been previously closed/plugged to prevent its connection to a user. In particular, the devices 2 - and in particular the respective processing units 101 - are connected by means of the wireless connection means 108 with at least an external/remote electronic unit 200 as described above. In particular, moreover, said external/remote electronic unit 200 is configured to receive suitable data and/or alarm signals from each device 2 and, on the basis of what has been received, identify and then signal any tampering with the closing condition of the end section 4 of the gas passage 3 in which the corresponding device 2 is installed.

Conveniently, in a substantially corresponding manner, the aforementioned infrastructure 250 can be used for monitoring the condition of effective/correct closure carried out on a plurality of end sections 4 of passages 3 of a liquid, in particular of water.

Preferably, said containment body 100 comprises a casing 8 which is made of at least two pieces 5, 6 which are provided with mechanical engagement means 11. In particular, said means 11 are configured to allow the union of said pieces to each other to said end section 4 and thus defining said casing 8 which is closed and which is fixed, preferably hanging, to said end section 4. Conveniently, said means 11 are configured to mechanically join the two pieces 5, 6 together without requiring further elements which are external to the pieces themselves, such as screws or the like, and in particular this mechanical engagement is defined by the interaction of respective members obtained/integrated in the pieces themselves.

Conveniently, said casing 8 comprises inside a chamber 9 in which the outlet 10 of said end section 4 of the gas passage 3 is intended to be completely housed. Preferably, said casing 8 is hermetically closed and, therefore, the chamber 9 is thus completely insulated from the external environment 1.

In particular, the device 2 is of the type intended to be installed in correspondence with an end section 4 defined by the end of a gas passage duct 3, preferably a gas delivery to a user, and/or defined by an attachment 13 defining a gas passage 3 and connectable/connected to one end of a gas duct, for example to the gas delivery duct. Conveniently, the device 2 can also be installed in correspondence with the end section of a duct for the passage of a liquid, in particular of water or oil, preferably of a duct for delivering water to a user.

Conveniently, said at least two pieces 5, 6 - once joined together by means of mechanical engagement means 11 - define said casing 8. In particular, the two pieces 5, 6 are configured to embrace and laterally wrap, at least in part, said end section 4 of the gas passage 3.

Advantageously, as illustrated in the figures, said casing 8 is defined by the union of two pieces 5 and 6, however it is also understood that - in a further embodiment not shown here - it could be defined by three or more pieces joined together by said mechanical engagement means 11.

Conveniently, the chamber 9 - containing the outlet 10 of the end section 4 of the gas passage 3 - is entirely defined inside said casing 8.

Advantageously, the end section 4 comprises an attachment 13, which is externally threaded, and around which a connecting element 14 is screwed, for example a nut, which is internally threaded.

Advantageously, to close the outlet 10 of the end section 4 of the gas passage 3, a closure cap 15 is provided which, preferably, is threaded externally and is screwed onto the connecting element 14. Basically, the connecting element 14 connects the closure cap 15 to the outlet 10 of the end section 4 of the gas passage 3. Preferably, a gasket 16 is interposed between the connecting element 14 and the closure cap 15 which is suitably retained and compressed by screwing the closure cap to the connecting element. Preferably, the connecting element 14 and/or the closure cap 15 is made of metal.

Conveniently, therefore, inside the chamber 9 defined by the union, around the end section 4, of the two pieces 5 and 6, the closure cap 15 and the connecting element 14 are also entirely housed, which therefore - once the two pieces 5,6 are joined together - are separated from the external environment 1 and, in particular, are not accessible from the outside. More in detail, advantageously, in this way, any access from the outside to the connecting element 14 is prevented and, therefore, also the possibility of rotating it so as to be able to unscrew the closure cap 15.

Advantageously, each of the two pieces 5, 6 is shaped so that their mutual union defines a casing 8 having a substantially cylindrical or frusto-conical shape.

Conveniently, the two pieces 5, 6 comprise corresponding portions 17' and 17" - which preferably together define the base of said casing 8 having a substantially cylindrical or frusto-conical shape - which are shaped in such a way as to define/delimit, following the union of said two pieces, a through opening 18 of shape and dimensions substantially corresponding to or slightly larger than the diameter of at least one cross section of the end section 4 of the gas passage 3, preferably of the diameter of the inlet section of said attachment 13. In particular, the two pieces 5, 6 have corresponding semicircular recesses, facing each other, which - following the union of the two pieces - define a through opening 18, of substantially circular shape, for the insertion/crossing of the end section 4, having a substantially circular section of passage 3.

Conveniently, once the two pieces 5, 6 are joined around the end section 4 of the gas passage 3 so that said section passes through the through opening 18, sealing material can also be applied in correspondence with any play present between the edges of the through opening 18 and said end section 4, to thus define a closure hermetically sealed chamber 9.

Advantageously, the two pieces 5, 6 are internally provided with ribs 19 which, once the two pieces are mutually joined and thus define the chamber 9, develop inside the chamber itself and cooperate with the connecting element 14 for its fixing and/or support, and are preferably configured to avoid the rotation of said connecting element 14 inside the casing 8. Preferably, the ribs 19 defined in each of the two pieces have a semi-annular conformation which, once the two pieces 5, 6 are joined together, define a single rib of annular conformation.

Conveniently, a rib 19' is provided in each of the two pieces 5, 6 which is spaced apart from the corresponding upper base so that the connecting element 14 can be inserted and locked between said rib and the base of the casing 8 defined by the portions 17', 17". In particular, for this purpose, the connecting element 14 rests on the rib 19'.

Conveniently, as said, said at least two pieces 5,6 are provided with mechanical engagement means 11, preferably interlocking, to join together said two pieces 5,6.

The mechanical engagement means 11 are configured so that, once said mechanical engagement has been defined/activated, it can be removed - and therefore the pieces 5,6 can be disjoined - only by breaking, at least in part, or by visibly damaging/the pieces themselves and/or said means 11. In other words, said means 11 are configured to define a non-removable engagement and thus join the pieces 5, 6 irreversibly, if not causing their corresponding breakage or damage.

Preferably, moreover, said first mechanical engagement means 11 are configured so as not to require any tools (for example screwdriver or wrench) to define/activate said engagement and, in particular, require only the application of a pushing action which can be exercised manually by the operator.

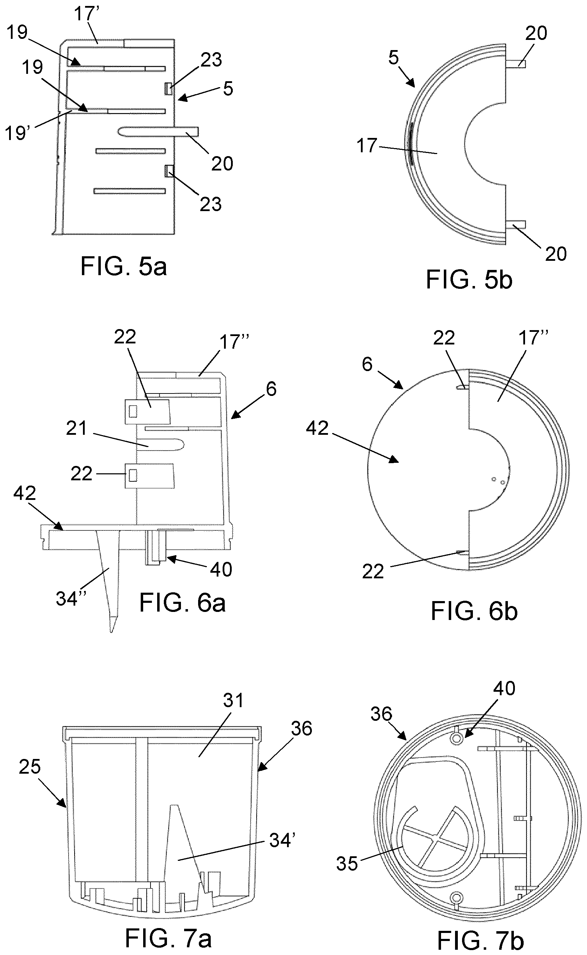

Preferably, said first mechanical engagement means 11 are configured to define a snap-fit and/or press-fit engagement of corresponding members, provided in one of the two pieces, with/within suitable counter-members provided in the other piece. For example, said first engagement means 11 can comprise a peg 20 which protrudes from the edges of the side walls of a piece 5 (see fig. 6a and 6b) and which is configured to engage by interference within a corresponding cavity 21 provided in the other piece 6 (see fig. 7a and 7b). Again, said first engagement means 11 may comprise a tab 22, which protrudes from the edges of the side walls of a piece 6 (see fig. 7a and 7b), and which is provided with an opening within which it engages by snap a corresponding protuberance 23 provided on the side walls of the other piece 5 (see fig. 6a and 6b).

Conveniently, the device 2 also comprises a cap 25 which internally delimits/defines a further chamber 31. Conveniently, said cap 25 is mechanically associable/associated with the casing 8. Conveniently, said further chamber 31 is fluidically and/or mechanically separated and is independent with respect to the first chamber 9.

Advantageously, therefore, the device 2 comprises a first half-shell 12, which is defined by said casing 8, and a second half-shell 30, which is defined by the cap 25.

Advantageously, in said further chamber 31 is housed an electronic board 32, preferably a printed circuit (in English "printed circuit board", called "PCB").

Conveniently, the processing unit 101 of the device 2 is implemented in said electronic board 32. Conveniently, the wireless connection means 108 with an external electronic unit 200 can be implemented and/or connected to said electronic board 32. Conveniently, the aforementioned sensors 102, 103, 104, 105, 106 of the device are mounted and/or connected to said electronic board 32.

Advantageously, inside said further chamber 31, the electronic board 32 is mounted so as to be inclined/angled with respect to an axis parallel or perpendicular to the earth's gravitational field.

Advantageously, inside said further chamber 31 there is also housed at least one electric power supply battery 33 which is electronically connected/mounted to/on said electronic board 32.

Advantageously, support means 34 are provided inside the cap 25 - to example defined by at least one protruding tab 34' from the internal side walls or from the bottom of said cap - to stably support the battery 33 and/or the electronic board 32.

Advantageously, a seat 35 is defined inside the cap 25 - for example defined by portions protruding from the internal side walls and/or from the bottom of said cap - for the electronic board 32 and/or the battery 33.

Conveniently, the cap 25 is joined to the casing 8 by means of mechanical connection 40 which, preferably, are also configured so that once said mechanical link is defined/activated, it can be removed - and therefore the cap and casing can be disjoint - only by breaking, at least in part, or damaging in a visible/evident and permanent way the pieces defining said cap and/or casing, and/or said means 40. In essence, said means 40 are configured to define a non-removable connection and thus joining the two half-shells in an irreversible way, if not causing the corresponding breakage or damage.

Conveniently, moreover, said mechanical connection means 40 are configured so as not to require any tool (for example screwdriver or wrench) to define/activate said engagement and, in particular, require only the application of a pushing action which can be exercised manually by the operator. Preferably, also the mechanical connection means 40 are configured to define a snap-fit and/or interference (press-fit) engagement of corresponding members, provided in the pieces defining the casing, with/within suitable counterparts members provided in the piece(s) defining the cap 25.

Advantageously, the casing 8 and the cap 25 are joined together - preferably in correspondence with an area 43 of the casing 8 which is opposite to that intended to be crossed by the end section 4 of the gas passage 3 - by mechanical coupling, preferably by shape coupling. Conveniently, said mechanical coupling is defined by the conformation and sizing of the edges of the casing 8 and the cap 25, which are also provided with said mechanical connection means 40.

Advantageously, in correspondence with the coupling area 43 between the casing 8 and the cap 25 also provides for the application of a sealant. In particular, the shape coupling between the casing 8 and the cap 25 defines a channel 44 to be filled with a suitable sealing material.

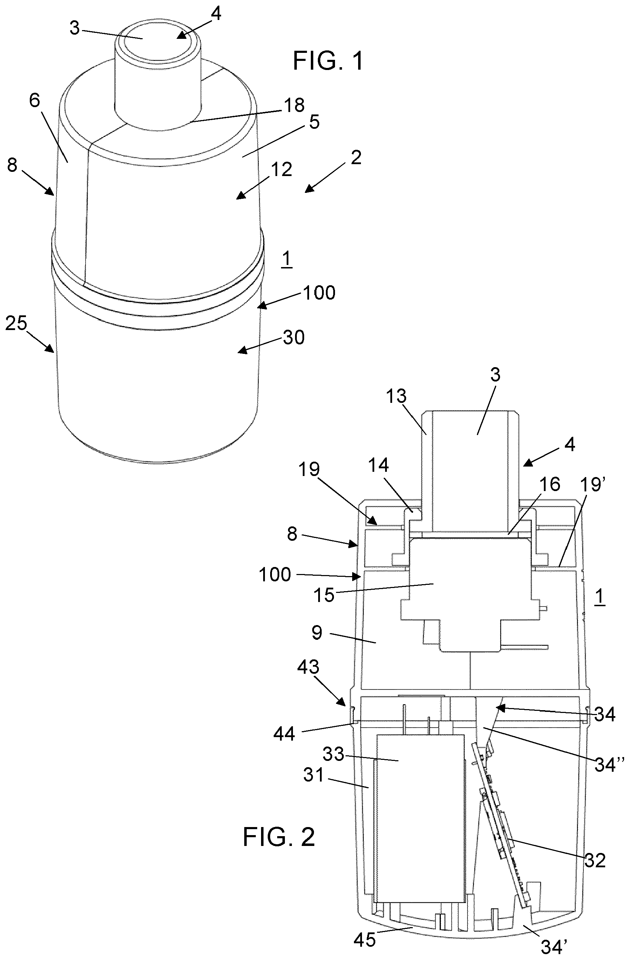

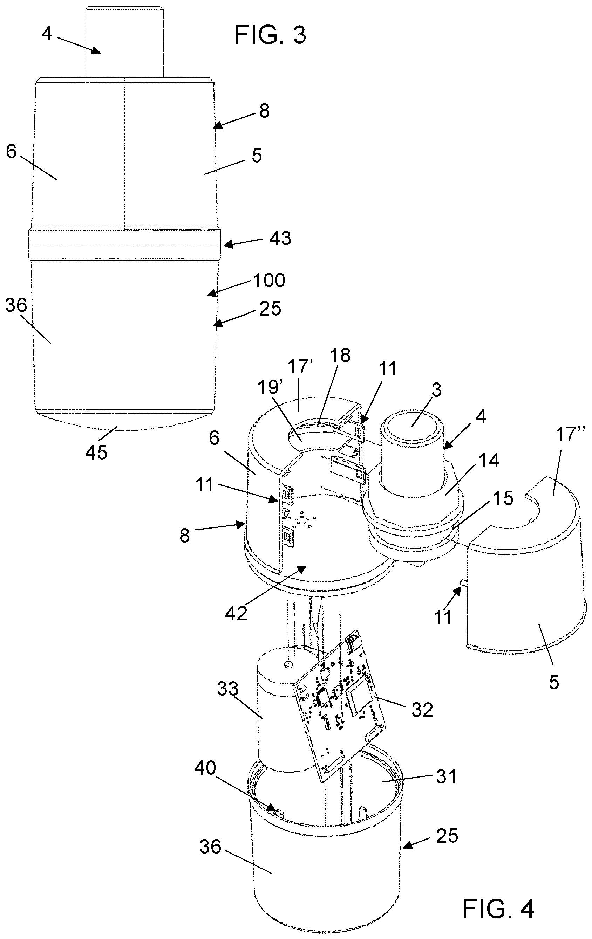

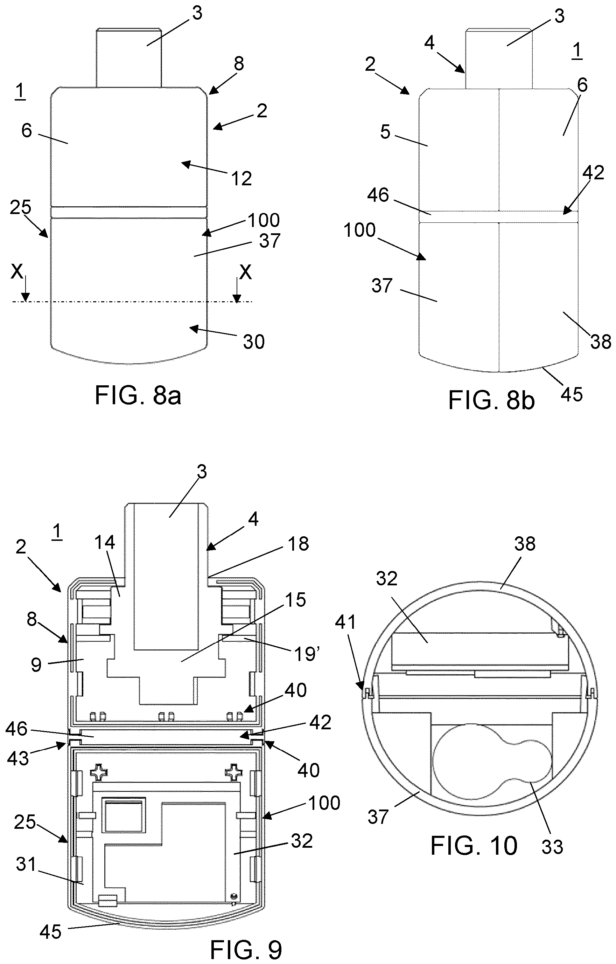

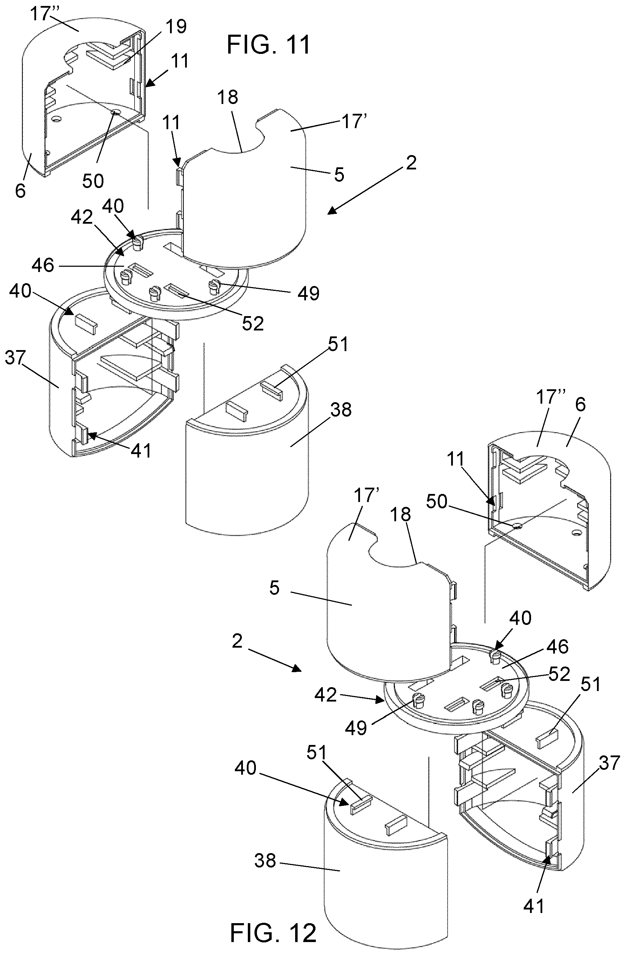

Conveniently, the cap 25 can be made in a single piece 36 (see embodiment of fig. 1-7b) or it can be made in two distinct pieces 37, 38 (see embodiment of fig. 8-12) which are provided with second mechanical engagement means 41 for their mutual union. Preferably, the second mechanical engagement means 41 for joining the pieces 37, 38 defining said cap 25 are of the same type, described above, of said first mechanical engagement means 11 for joining the pieces 5, 6 defining said casing 8.

Conveniently, also these second mechanical engagement means 41 are configured so that, once said mechanical engagement has been defined/activated, it can be removed - and therefore the two pieces 37, 38 can be separated - only by breaking, at least in part, or by visibly and permanently damaging the pieces themselves and/or said second means 41. In essence, said second means 41 are configured to define a non-removable engagement and thus join the two pieces 37, 38 irreversibly, if not causing them the corresponding breakage or damage.

Preferably, the second half-shell 30 defined by the closure cap 15 has a shape and dimensions substantially corresponding to those of the first half-shell 12 defined by the casing 8. Preferably, said two half-shells 12, 30 have a substantially cylindrical or truncated cone shape, or possibly parallelepiped.

Preferably, the device 2 is defined by the union of said first half-shell 12 (which is defined by the casing 8) and of said second half-shell 30 (which is defined by the cap 25) and, therefore, inside it comprises said first chamber 9, in which the outlet 10 of said end section 4 is completely housed, and a further/second chamber 31 in which the electronic board 32 and, advantageously, also the electric power supply battery 33 and/or the control unit are housed data transmission and/or reception.

Advantageously, the first chamber 9 and the second chamber 31 are separate and independent from each other, i.e. they are not in mutual communication. In particular, for this purpose, a dividing wall 42 is provided which conveniently separates the casing 8 and the cap 25 from each other. Advantageously, the dividing wall 42 can be integrated and defined in a single piece with one of said two pieces 5, 6 that define the casing 8 (see embodiment of fig. 1-7b) and/or can be made in a separate piece and distinct from all other pieces (see embodiment of fig. 8-12) and/or it can be made by joining the two pieces 5, 6 defining the casing 8.

Conveniently, on the side of the dividing wall 42 destined to be turned towards the inside of the cap 25, further support means 34 can also be provided of the battery 33 and/or of the electronic board 32. For example, these means comprise a further fin 34" which cooperates with the one provided in said cap 25 to stably support the electronic board 32 and/or the battery 33.

Advantageously, the external surface of the bottom 45 of the cap 25 - bottom 45 which is preferably defined on one side of the device 2 which is opposite to that in which said through opening 18 is provided - is shaped in such a way as to tilt laterally and/or unbalance when placed on a flat base. In particular, for this purpose, the external surface of the bottom 45 is concave and/or rounded, and preferably has the shape of the external surface of a spherical or elliptical cap. Conveniently, the external surface of the bottom 45 can have any shape which makes it unstable vertically and horizontally when in contact with a flat base. Advantageously, in this way, the device 2 - if it were removed - could not be stably positioned on a flat base, as it would necessarily fall and this would allow the sensors (for example a gyroscope and/or accelerometer), of which it is provided the device itself, to identify a case of removal of the device 2 from the end section 4 of the gas passage 3, and thus to send a corresponding alarm.

Conveniently, in the embodiment of figures 8 to 12, a further intermediate piece 46 is also provided defining the dividing wall 42 which is then intended to be joined to the first casing 8 (which is obtained by joining two pieces 5, 6) and to the cap 25 (which in Figures 8 to 12 is obtained by joining two distinct pieces 37, 38 but could also be made in a single piece 36). In particular, in this embodiment, the first casing 8 and the cap 25 are joined/associated with each other by means of the intermediate piece 46 defining the dividing wall 42; suitably, in this case, the mechanical connection means 40 are configured to cause a connection between said casing 8 and the dividing wall 42 (preferably at one of its first faces) and, also, between the cap 25 and the dividing wall itself 42 (preferably in correspondence with its other face).

More in detail, also in this case, the mechanical connection means 40 are of the type described above. Preferably, said mechanical connection means 40 comprise male-type members (for example mushroom-shaped pins 49) provided in the dividing wall 42 intended to engage by interlocking, preferably snap-fit, into corresponding female-type members (for example through holes 50) provided in the pieces 5, 6 defining the casing 8, or vice versa. Preferably, said connection means 40 comprise male-type members (for example folded sides 51) provided in the piece 36 and/or in the pieces 37, 38 defining said cap 25 and intended to engage by interlocking, preferably by snap action, into corresponding members of female type (for example through slots 52) provided in the dividing wall 42, or vice versa.

Conveniently, the pieces 5,6 defining the casing 8 and the piece 36 and/or the pieces 37, 38 defining the cap 25 and/or the intermediate piece 46 defining the dividing wall 42 are made of polymeric material, preferably of plastic.

The assembly of the device 2 advantageously takes place according to the following method. First, the electronic board 32 and the battery 33 are inserted inside the cap 25 and the latter is then closed, preferably still in the factory, by applying to it the piece 6 of the casing 8 which is also provided with said dividing wall 42 (cf. embodiment of fig. 1-7b) or by applying to it the intermediate piece 46 defining the dividing wall 42 and then only one of the two pieces 5,6 (see embodiment of fig. 8-12); suitably, in this way, already in the factory, a partially pre-assembled device is thus obtained (ie defined by the cap 25 and by only one of the two pieces defining the casing 8) which is then completed/closed only on site by joining, around the end section 4 of the gas passage 3 (preferably already closed by means of the closure cap 15), the other piece 5 or 6 of the casing 8 to the partially pre-assembled device.

Conveniently, the activation of the device 2 takes place on site, once it has been installed/closed around the end section 4 of the gas passage, by means of a magnet and touching a predefined point provided in the cap.

Advantageously, as mentioned, once installed/closed around the end section 4 of the gas passage 3, the casing 8 and/or the cap 25 of the device 2 can be opened/disassembled/detached only causing breakage and/or damage. visible and permanent parts of the device itself.

From what has been said it is clear that the device according to the invention is particularly advantageous in that:
- detects and signals to a remote unit that, in correspondence with the end section of a passage of a fluid (in particular of a gas or water or oil or other liquids in general) in which the device is installed, damage and/or tampering with the device itself has occurred; in particular, it avoids the need to physically access and go to the end section of a fluid passage, for example a gas duct, to check whether there has been tampering and/or alteration of the previous closure of said fluid passage terminal,
- promptly sends an alarm in case of tampering with the closure carried out in correspondence with the end section of a passage of a fluid in which the device itself is installed,
- it can also operate as a device for detecting and/or analyzing data relating to environmental parameters and/or the fluid at the end of a passage of said fluid,
- it allows a continuous and reliable monitoring of the effective state of closure and no tampering of the closing section of a fluid passage, in particular of one end of a fluid delivery duct,
- it is easily and quickly applicable around the end section of a fluid passage; in particular, its pieces can be coupled together without requiring the use of any tools,
- defines an additional safety and sealing element (which is additional to the closure cap applied at the outlet of the fluid passage) to prevent the fluid from escaping to the external environment safety,
- protects and prevents direct access to the end section of the passage of a fluid, thus preventing its tampering,
- allows to detect any tampering carried out in correspondence with the end section of the passage of a fluid since, once applied around said section, it can only be removed by damaging it or causing its mechanical breakage, even partial, which is therefore easily visible,
- it is cheap since it consists of a small number of components which are simple to manufacture and of low cost, and which can be easily produced in series.

In particular, unlike the known solutions of US2016/0351028 and US2010/0302025, the processing unit 101 of the device 2 according to the present invention is configured so that, when it identifies a trigger event, the acquisition/sampling frequency is increased, thus passing from a first basic acquisition/sampling frequency to a second and higher acquisition/sampling frequency, of the signals coming from the sensor 102 to detect movements and/or vibrations of the containment body 100, and from the sensor 103 to detect variations of the angular orientation of said containment body 100. In particular, this allows to have a first standard and default condition for data detection/acquisition and also to have a second data detection/acquisition condition which is activated only if a trigger event occurred. This is particularly advantageous as it allows the device to operate in two conditions/modes which are individually optimized in terms of the amount of data detected; in particular, given that in the first mode/condition the detected data are acquired with a lower frequency, it is advantageously avoided to overload the transmission of these data to the external unit and/or their storage in the storage means of the processing unit, while in the second mode/condition the detected data are acquired with a greater frequency to allow thus a more accurate and precise processing in order to identify an event of actual tampering of the containment body 100 of the device. Moreover, advantageously, this allows to optimize the energy consumption of the device, and in particular the duration of the electric supply battery 33.

Furthermore, unlike US2016/0351028, the present invention provides that, even if at a lower frequency, the data of the sensors 102 and 103 (which respectively detect the movements and/or vibrations of the containment body 100 and the variations of the angle of said containment body 100) are always and continuously acquired by the processing unit 101 and this is advantageous since it allows to use the same data acquired by said sensors in order to identify the trigger event to pass from the first to the second operating condition.

## Claims

1. Device (2) to be applied in correspondence with a passage (3) of a fluid, such as gas, water, oil or other liquid in general, preferably in correspondence with the end section (4) of a passage (3) of a fluid, said device comprising a containment body (100) which is configured to be closed and/or wrapped around said passage (3) and, inside said containment body (100), are housed:
- at least one sensor (102) for detecting movements and/or vibrations of said containment body (100),
- at least one sensor (103) for detecting variations in the angular orientation of said containment body (100),
- at least an electronic processing unit (101) which is electronically connected to said sensors (102, 103) and which is configured to receive the data detected by said sensors, said data being then intended to be used by said electronic processing unit ( 101) and/or by an external electronic unit (200) to identify tampering with said containment body (100),
- wireless connection means (108) of said electronic processing unit (101) with at least one external electronic unit (200).
and **characterized in that** said processing unit (101) of said device (2) is configured so that, when it identifies a trigger event, the acquisition/sampling frequency is increased, thus passing from a first acquisition/sampling frequency based on a second and higher acquisition/sampling frequency, of the signals coming from said at least one sensor (102) to detect movements and/or vibrations of said containment body (100) and coming from said at least one sensor (103) to detect variations in the angular orientation of said containment body (100).

2. Device according to claim 1, **characterized in that**:
- said at least one sensor (102) for detecting movements and/or vibrations of said containment body (100) comprises an accelerometer, preferably with three axes, and
- at least one sensor (103) for detecting variations in the angular orientation of said containment body (100) comprises a gyroscopic sensor and/or a magnetometer, preferably with three axes.

3. Device according to one or more of the preceding claims, **characterized in that** it comprises:
- at least one sensor (104), preferably for temperature and/or pressure and/or humidity and/or acoustic noise, to detect parameters of the environment in which the device is installed, and/or
- at least one sensor (106) to detect the concentration of harmful gases in the air of the environment in which the device itself is installed and/or inside the containment body (100) of the device,
and by the fact that said sensors (104, 106) to detect parameters and/or the concentration of harmful gases in the environment where the device is installed are housed inside said containment body (100) and are electronically connected to said processing unit (101) which it is configured to receive the data detected by said sensors (104, 105, 106) and to send them, by means of said wireless connection means (108), to said at least one external electronic unit (200).

4. Device according to one or more of the preceding claims, **characterized in that**:
- comprises at least one sensor (105), preferably for temperature and pressure, for detecting corresponding parameters of the fluid passing through said passage (3), and
- said at least one sensor (105) for detecting fluid parameters is housed inside said containment body (100) and is electronically connected to said processing unit (101) which is configured to receive the data detected by said sensor (105) and to send them, by means of said wireless connection means (108), to said at least one external electronic unit (200).

5. Device according to one or more of the preceding claims, **characterized in that** said processing unit (101) of said device (2) is configured:
- to process the data coming from said at least one sensor (102) to detect movements and/or vibrations of said containment body (100), and from said at least one sensor (103) to detect variations in the angular orientation of said containment body (100), to thus identify an event and/or attempt to tamper with said containment body (100),
- to generate and send, by means of said wireless connection means (108), a corresponding alarm signal to the external unit (200) if, on the basis of the processing carried out on said data, an event and/or attempt to tamper with said containment body (100) is identified.

6. Device according to one or more of the preceding claims, **characterized in that** said processing unit (101) of said device (2) is configured:
- to send, by means of said wireless connection means (108), automatically and periodically, preferably according to a predefined frequency, a signal to said external unit (200),
- to process the data coming from said at least one sensor (102) to detect movements and/or vibrations of said containment body (100), and from said at least one sensor (103) to detect variations in the angular orientation of said containment body (100), to thus identify an event and/or attempt to tamper with said containment body (100),
- to interrupt the sending of said signal if, on the basis of the processing carried out on said data, an event and/or attempt to tamper with said containment body (100) is identified.

7. Device according to one or more of the preceding claims, **characterized in that** said processing unit (101) of said device (2) is configured to send to the external unit (200), by means of said wireless connection means (108), the data coming from said at least one sensor (102) to detect movements and/or vibrations of said containment body (100), and from said at least one sensor (103) to detect changes in the angular orientation of said containment body (100), to thus allow said external unit (200) to process the data thus received in order to identify an event and/or an attempt to tamper with said containment body (100).

8. Device according to one or more of the preceding claims, **characterized in that** said processing unit (101) of said device (2) is configured:
- to perform a first processing of the data coming from said at least one sensor (102) to detect movements and/or vibrations of said containment body (100), and from said at least one sensor (103) to detect variations in the angular orientation of said containment body (100),
- to send, by means of said wireless connection means (108), the data thus preprocessed to the external unit (200) to thus allow the latter to identify, on the basis of the data received, if there has actually been an event of tampering with said containment body (100).

9. A device according to one or more of the preceding claims, **characterized in that** said processing unit (101) of said device (2) is configured to identify said trigger event by comparing data, which are detected by said sensors (102, 103) at said first base acquisition/sampling frequency, with at least one predefined threshold value.

10. Device according to one or more of the preceding claims, **characterized in that** said processing unit (101) of said device is configured to send, through said wireless connection means (108), to the external electronic unit (200) detected with said second and higher acquisition/sampling frequency, to allow the latter to then carry out further processing on the data in order to identify, on the basis of the data received, if there has actually been a tampering event of said containment body (100).

11. Device according to one or more of the preceding claims, **characterized in that**:
- comprises, inside said containment body (100), storage means (107) which are connected and/or implemented in the processing unit (101), and
- said processing unit (101) is configured to store in said storage means (107) the data detected by said sensors (102, 103, 104, 105, 106) and/or possibly pre-processed.

12. A device according to one or more of the preceding claims, **characterized by** the fact that, in the processing unit (101) of each device (2), is installed and run a program that is configured for:
- detect and store, at the time of installation of the device (2) on the end section (4) of said passage (3), the corresponding values from the accelerometer (102) and of the gyroscopic sensor (103) for each axis X, Y and Z, thus obtaining the initial data Axᵢₙᵢₜ, Ayᵢₙᵢₜ, Azᵢₙᵢₜ, Gxinit, Gyinit, Gzᵢₙᵢₜ,
- at each sampling instant "i", the accelerometer (102) and gyroscopic sensor (103) data are detected for each axis X, Y and Z, thus obtaining the data Axi, Ayi, Azi, Gxi, Gyi, Gzi, and do the following:
- calculate the difference, for each X, Y and Z axis, between each data detected at instant "i" and the corresponding initial data and/or the corresponding data detected at the previous instant "i-1", thus obtaining the following data DAx, Day, DAz, DGx, DGy, DGz,
- occurs, if the absolute value of at least one of said data DAx, DAy, DAz, DGx, DGy, DGz, as calculated above, is greater than at least one predefined threshold value (A_{LIMIT}, GLIMIT),
- only in the event of a positive outcome of this check, a corresponding counter "C" is increased by one unit,
- the counter "C" thus increased is compared with a predefined limit value DECISION_LIMIT and, only when the counter C is greater than said predefined limit value DECISION_LIMIT, a corresponding signal is generated and/or sent, preferably an alarm.

13. Device according to one or more of the preceding claims, **characterized in that** said containment body (100) comprises:
- a chamber (9) in which the outlet mouth (10) of said end section (4) of the gas passage (3) is intended to be completely housed,
- a further chamber (31), which is separate from said first chamber (9), and in which an electronic board (32) is housed in which said at least one electronic processing unit (101), said at least one sensor (102), are mounted for detecting the movements and/or vibrations of said containment body (100), and said at least one sensor (103) for detecting changes in the angular orientation of said containment body (100).

14. Device according to one or more of the preceding claims, **characterized in that** said containment body (100) comprises at least two pieces (5, 6) which are provided with mechanical engagement means (11) configured to allow the mutual union of said at least two pieces (5, 6) around said end section (4) and thus define a casing (8) which is fixed, preferably hanging, to said end section (4), and in which:
- said casing (8) comprises in its interior a chamber (9) in which is intended to be completely housed the outlet mouth (10) of said passage (3) the end section (4),
- said mechanical engagement means (11) are obtained in said at least two pieces (5, 6) and are configured so that, once said mechanical engagement has been defined/activated and thus joined together said at least two pieces (5, 6), said at least two pieces (5,6) can be disunited only by breaking, at least in part, or by visibly and permanently damaging said at least two pieces (5, 6) and/or said mechanical engagement means (11).

15. Infrastructure (250) for monitoring the condition of effective/correct closure carried out on a plurality of end sections (4) of passages (3) of a fluid, such as gas, water or other liquid in general, preferably of delivery ducts of the fluid previously closed and sealed, **characterized by** the fact of comprising:
- a plurality of devices (2) according to one or more of the preceding claims, each of said devices (2) being installed in correspondence with an end section (4) of said passage (3),
- and in that said devices (2) are connected with at least one external unit (200), preferably remote, which is wirelessly connected with said at least one processing unit (101) of each of said devices (2), said external unit (200) is configured for:
- receiving the data, possibly pre-processed by said processing unit (101) of at least one device, coming from the sensors (102, 103) of the corresponding device (2), and to process the data thus received in order to thus identify an event and/or attempted tampering with the containment body (100) of the corresponding device (2) that sent said data, and/or
- receiving the alarm signals generated and sent by at least one device (2) which, on the basis of the processing carried out on the data coming from the sensors (102, 103) of the corresponding device (2), has identified an event and/or attempted tampering of its containment body (100).

## Patentansprüche

1. Vorrichtung (2), die gemäß eines Durchflusses (3) eines Fluids wie Gas, Wasser, Öl oder einer anderen Flüssigkeit im Allgemeinen, vorzugsweise gemäß eines Endabschnitts (4) eines Durchflusses (3) eines Fluids, angewendet wird, wobei die Vorrichtung einen Aufnahmekörper (100) umfasst, der so konfiguriert ist, dass er geschlossen und/oder um den Durchfluss (3) herum gewickelt wird, und in dem Aufnahmekörper (100) ist Folgendes untergebracht:
- mindestens ein Sensor (102) zum Erfassen von Bewegungen und/oder Vibrationen des Aufnahmekörpers (100),
- mindestens ein Sensor (103) zum Erfassen von Änderungen in der Winkelausrichtung des Aufnahmekörpers (100),
- mindestens eine elektronische Verarbeitungseinheit (101), die elektronisch mit den Sensoren (102, 103) verbunden und so konfiguriert ist, dass sie die von den Sensoren erfassten Daten empfängt, wobei die Daten dann dazu bestimmt sind, von der elektronischen Verarbeitungseinheit (101) und/oder von einer externen elektronischen Einheit (200) verwendet zu werden, um Manipulationen an dem Aufnahmekörper (100) zu erkennen,
- drahtlose Verbindungsmittel (108) der elektronischen Verarbeitungseinheit (101) mit mindestens einer externen elektronischen Einheit (200).
und **dadurch gekennzeichnet, dass** die Verarbeitungseinheit (101) der Vorrichtung (2) so konfiguriert ist, dass, wenn sie ein Auslöseereignis erkennt, die Erfassungs-/Abtastfrequenz erhöht wird, so dass von einer ersten Erfassungs-/Abtastfrequenz zu einer zweiten und höheren Erfassungs-/Abtastfrequenz der Signale übergegangen wird, die von dem mindestens einen Sensor (102) kommen, um Bewegungen und/oder Vibrationen des Aufnahmekörpers (100) zu erfassen, und die von dem mindestens einen Sensor (103) kommen, um Änderungen in der Winkelausrichtung des Aufnahmekörpers (100) zu erfassen.

2. Vorrichtung nach Anspruch 1, **dadurch gekennzeichnet, dass**:
- der mindestens eine Sensor (102) zum Erfassen von Bewegungen und/oder Vibrationen des Aufnahmekörpers (100) einen Beschleunigungsmesser, vorzugsweise mit drei Achsen, umfasst, und
- mindestens ein Sensor (103) zum Erfassen von Änderungen der Winkelausrichtung des Aufnahmekörpers (100) einen Kreiselsensor und/oder ein Magnetometer, vorzugsweise mit drei Achsen, umfasst.

3. Vorrichtung nach einem oder mehreren der vorstehenden Ansprüche, **dadurch gekennzeichnet, dass** sie umfasst:
- mindestens einen Sensor (104), vorzugsweise für Temperatur und/oder Druck und/oder Feuchtigkeit und/oder Schall, zum Erfassen von Parametern der Umgebung, in der die Vorrichtung installiert ist, und/oder
- mindestens einen Sensor (106) zum Erfassen der Konzentration schädlicher Gase in der Luft der Umgebung, in der die Vorrichtung installiert ist, und/oder im Inneren des Aufnahmekörpers (100) der Vorrichtung,
und **gekennzeichnet durch** die Tatsache, dass die Sensoren (104, 106) zum Erfassen von Parametern und/oder der Konzentration von schädlichen Gasen in der Umgebung, in der die Vorrichtung installiert ist, innerhalb des Aufnahmekörpers (100) untergebracht und elektronisch mit der Verarbeitungseinheit (101) verbunden sind, die so konfiguriert ist, dass sie die von den Sensoren (104, 105, 106) erfassten Daten empfängt und sie mittels drahtloser Verbindungsmittel (108) an die mindestens eine externe elektronische Einheit (200) sendet.

4. Vorrichtung nach einem oder mehreren der vorstehenden Ansprüche, **dadurch gekennzeichnet, dass**:
- sie mindestens einen Sensor (105), vorzugsweise für Temperatur und Druck, zum Erfassen der entsprechenden Parameter des durch den Durchfluss (3) fließenden Fluids umfasst, und
- der mindestens eine Sensor (105) zum Erfassen von Fluidparametern im Inneren des Aufnahmekörpers (100) untergebracht und elektronisch mit der Verarbeitungseinheit (101) verbunden ist, die so konfiguriert ist, dass sie die von dem Sensor (105) erfassten Daten empfängt und sie mittels der drahtlosen Verbindungsmittel (108) an die mindestens eine externe elektronische Einheit (200) sendet.

5. Vorrichtung nach einem oder mehreren der vorstehenden Ansprüche, **dadurch gekennzeichnet, dass** die Verarbeitungseinheit (101) der Vorrichtung (2) konfiguriert ist:
- um die Daten zu verarbeiten, die von dem mindestens einen Sensor (102) kommen, um Bewegungen und/oder Vibrationen des Aufnahmekörpers (100) zu erfassen, und von dem mindestens einen Sensor (103), um Änderungen in der Winkelausrichtung des Aufnahmekörpers (100) zu erfassen, um so ein Ereignis und/oder einen Versuch der Manipulation des Aufnahmekörpers (100) zu erkennen,
- um mittels der drahtlosen Verbindungsmittel (108) ein entsprechendes Alarmsignal zu erzeugen und an die externe Einheit (200) zu senden, wenn auf der Grundlage der an den Daten durchgeführten Verarbeitung ein Ereignis und/oder ein Versuch der Manipulation des Aufnahmekörpers (100) erkannt wird.

6. Vorrichtung nach einem oder mehreren der vorstehenden Ansprüche, **dadurch gekennzeichnet, dass** die Verarbeitungseinheit (101) der Vorrichtung (2) konfiguriert ist:
- um mittels der drahtlosen Verbindungsmittel (108) automatisch und periodisch, vorzugsweise gemäß einer vordefinierten Frequenz, ein Signal an die externe Einheit (200) zu senden,
- um die Daten zu verarbeiten, die von dem mindestens einen Sensor (102) kommen, um Bewegungen und/oder Vibrationen des Aufnahmekörpers (100) zu erfassen, und von dem mindestens einen Sensor (103), um Änderungen in der Winkelausrichtung des Aufnahmekörpers (100) zu erfassen, um so ein Ereignis und/oder einen Versuch der Manipulation des Aufnahmekörpers (100) zu erkennen,
- um das Senden des Signals zu unterbrechen, wenn auf der Grundlage der an den Daten durchgeführten Verarbeitung ein Ereignis und/oder ein Versuch der Manipulation des Aufnahmekörpers (100) identifiziert wird.

7. Vorrichtung nach einem oder mehreren der vorstehenden Ansprüche, **dadurch gekennzeichnet, dass** die Verarbeitungseinheit (101) der Vorrichtung (2) so konfiguriert ist, dass sie mittels der drahtlosen Verbindungsmittel (108) an die externe Einheit (200) Daten sendet, die von dem mindestens einen Sensor (102) kommen, um Bewegungen und/oder Vibrationen des Aufnahmekörpers (100) zu erfassen, und die von dem mindestens einen Sensor (103) kommen, um Änderungen in der Winkelausrichtung des Aufnahmekörpers (100) zu erfassen, um so der externen Einheit (200) zu ermöglichen, die so empfangenen Daten zu verarbeiten, um ein Ereignis und/oder einen Versuch der Manipulation des Aufnahmekörpers (100) zu erkennen.

8. Vorrichtung nach einem oder mehreren der vorstehenden Ansprüche, **dadurch gekennzeichnet, dass** die Verarbeitungseinheit (101) der Vorrichtung (2) konfiguriert ist:
- um eine erste Verarbeitung der Daten durchzuführen, die von dem mindestens einen Sensor (102) kommen, um Bewegungen und/oder Vibrationen des Aufnahmekörpers (100) zu erfassen, und von dem mindestens einen Sensor (103) kommen, um Änderungen in der Winkelausrichtung des Aufnahmekörpers (100) zu erfassen,
- um mittels der drahtlosen Verbindungsmittel (108) die so vorverarbeiteten Daten an die externe Einheit (200) zu senden, um dieser so zu ermöglichen, auf der Grundlage der empfangenen Daten zu erkennen, ob tatsächlich ein Manipulationsereignis an dem Aufnahmekörper (100) stattgefunden hat.

9. Vorrichtung nach einem oder mehreren der vorstehenden Ansprüche, **dadurch gekennzeichnet, dass** die Verarbeitungseinheit (101) der Vorrichtung (2) so konfiguriert ist, dass sie das Auslöseereignis erkennt, indem sie Daten, die von den Sensoren (102, 103) mit der ersten Basiserfassungs-/Abtastfrequenz erfasst werden, mit mindestens einem vordefinierten Schwellenwert vergleicht.

10. Vorrichtung nach einem oder mehreren der vorstehenden Ansprüche, **dadurch gekennzeichnet, dass** die Verarbeitungseinheit (101) der Vorrichtung so konfiguriert ist, dass sie über die drahtlosen Verbindungsmittel (108) an die externe elektronische Einheit (200), die mit der zweiten und höheren Erfassungs-/Abtastfrequenz erfasst wurde, sendet, um es letzterer zu ermöglichen, dann eine weitere Verarbeitung der Daten durchzuführen, um auf der Grundlage der empfangenen Daten zu erkennen, ob tatsächlich ein Manipulationsereignis an dem Aufnahmekörper (100) stattgefunden hat.

11. Vorrichtung nach einem oder mehreren der vorstehenden Ansprüche, **dadurch gekennzeichnet, dass**:
- sie im Inneren des Aufnahmekörpers (100) Speichermittel (107) umfasst, die mit der Verarbeitungseinheit (101) verbunden und/oder in diese eingebaut sind, und
- die Verarbeitungseinheit (101) so konfiguriert ist, dass sie in dem Speichermittel (107) die von den Sensoren (102, 103, 104, 105, 106) erfassten und/oder möglicherweise vorverarbeiteten Daten speichert.

12. Vorrichtung nach einem oder mehreren der vorstehenden Ansprüche, **dadurch gekennzeichnet, dass** in der Verarbeitungseinheit (101) jeder Vorrichtung (2) ein Programm installiert ist und abläuft, das dazu konfiguriert ist:
- die entsprechenden Werte des Beschleunigungsmessers (102) und des Kreiselsensors (103) für jede X-, Y- und Z-Achse zum Zeitpunkt der Installation der Vorrichtung (2) am Endabschnitt (4) des Durchflusses (3) zu erfassen und zu speichern und so die Ausgangsdaten Axinit, AYinit, AZinit, GXinit, Gyinit, GZinit zu erhalten,
- zu jedem Abtastzeitpunkt "i" werden die Daten des Beschleunigungsmessers (102) und des Kreiselsensors (103) für jede X-, Y- und Z-Achse erfasst, wodurch die Daten Axi, Ayi, Azi, Gxi, Gyi, Gzi erhalten werden, und Folgendes durchzuführen:
- Berechnen, für jede X-, Y- und Z-Achse, der Differenz zwischen den zum Zeitpunkt "i" erfassten Daten und den entsprechenden Ausgangsdaten und/oder den entsprechenden, zum vorherigen Zeitpunkt "i-1" erfassten Daten, dadurch Erhalten der nachfolgenden Daten DAx, Day, DAz, DGx, DGy, DGz,
- ist gegeben, wenn der Absolutwert mindestens einer der wie oben berechneten Daten DAx, DAy, DAz, DGx, DGy, DGz größer ist als mindestens ein vordefinierter Schwellenwert (AuMIT, GuMIT),
- nur im Falle eines positiven Ergebnisses dieser Prüfung wird ein entsprechender Zähler "C" um eine Einheit erhöht,
- der so erhöhte Zähler "C" wird mit einem vordefinierten Grenzwert DECISION_LIMIT verglichen und nur wenn der Zähler C größer als der vordefinierte Grenzwert DECISION_LIMIT ist, wird ein entsprechendes Signal, vorzugsweise ein Alarm, erzeugt und/oder gesendet.

13. Vorrichtung nach einem oder mehreren der vorstehenden Ansprüche, **dadurch gekennzeichnet, dass** der Aufnahmekörper (100) Folgendes umfasst:
- eine Kammer (9), in der die Ausgangsöffnung (10) des Endabschnitts (4) des Gasdurchflusses (3) vollständig untergebracht werden soll,
- eine weitere Kammer (31), die von der ersten Kammer (9) getrennt ist und in der eine elektronische Platine (32) untergebracht ist, in der die mindestens eine elektronische Verarbeitungseinheit (101), der mindestens eine Sensor (102) zum Erfassen der Bewegungen und/oder Vibrationen des Aufnahmekörpers (100) und der mindestens eine Sensor (103) zum Erfassen von Änderungen in der Winkelausrichtung des Aufnahmekörpers (100) angebracht sind.

14. Vorrichtung nach einem oder mehreren der vorstehenden Ansprüche, **dadurch gekennzeichnet, dass** der Aufnahmekörper (100) mindestens zwei Teile (5, 6) umfasst, die mit mechanischen Eingriffsmitteln (11) versehen sind, die so konfiguriert sind, dass sie die gegenseitige Verbindung der mindestens zwei Teile (5, 6) um den Endabschnitt (4) herum ermöglichen und somit ein Gehäuse (8) definieren, das an dem Endabschnitt (4) vorzugsweise hängend befestigt ist, und wobei:
- das Gehäuse (8) in seinem Inneren eine Kammer (9) umfasst, in der die Austrittsöffnung (10) des Durchflusses (3) vollständig untergebracht werden soll, der Endabschnitt (4),
- die mechanischen Eingriffsmittel (11) in den mindestens zwei Teilen (5, 6) erhalten werden und so konfiguriert sind, dass, sobald der mechanische Eingriff definiert/aktiviert und somit die mindestens zwei Teile (5, 6) miteinander verbunden wurden, die mindestens zwei Teile (5, 6) nur durch zumindest teilweises Brechen oder durch sichtbare und dauerhafte Beschädigung der mindestens zwei Teile (5, 6) und/oder der mechanischen Eingriffsmittel (11) getrennt werden können.

15. Infrastruktur (250) zum Überwachen des Zustands eines wirksamen/korrekten Verschlusses, der an einer Vielzahl von Endabschnitten (4) von Durchflüssen (3) eines Fluids wie Gas, Wasser oder einer anderen Flüssigkeit im Allgemeinen, vorzugsweise von Förderleitungen des Fluids, die zuvor verschlossen und abgedichtet wurden, vorgenommen wird, **gekennzeichnet durch** die Tatsache, dass sie:
- eine Vielzahl von Vorrichtungen (2) nach einem oder mehreren der vorstehenden Ansprüche umfasst, wobei jede der Vorrichtungen (2) gemäß eines Endabschnitts (4) des Durchflusses (3) installiert ist,
- und dass die Vorrichtungen (2) mit mindestens einer externen Einheit (200), vorzugsweise ferngesteuert, verbunden sind, die drahtlos mit der mindestens einen Verarbeitungseinheit (101) jeder der Vorrichtungen (2) verbunden ist, wobei die externe Einheit (200) konfiguriert ist zum:
- Empfangen der von den Sensoren (102, 103) der entsprechenden Vorrichtung (2) kommenden Daten, die möglicherweise von der Verarbeitungseinheit (101) mindestens einer Vorrichtung vorverarbeitet wurden, und Verarbeiten der so empfangenen Daten, um so ein Ereignis und/oder einen Versuch der Manipulation des Aufnahmekörpers (100) der entsprechenden Vorrichtung (2) zu erkennen, die die Daten gesendet hat, und/oder
- Empfangen der Alarmsignale, die von mindestens einer Vorrichtung (2) erzeugt und gesendet wurden, die auf der Grundlage der Verarbeitung der von den Sensoren (102, 103) der entsprechenden Vorrichtung (2) kommenden Daten ein Ereignis und/oder einen Versuch der Manipulation ihres Aufnahmekörpers (100) erkannt hat.

## Revendications

1. Dispositif (2) à appliquer en correspondance avec un passage (3) d'un fluide, tel que gaz, eau, huile ou autre liquide en général, de préférence en correspondance avec la section d'extrémité (4) d'un passage (3) d'un fluide, ledit dispositif comprenant un corps de confinement (100) qui est configuré pour être fermé et/ou enroulé autour dudit passage (3) et, à l'intérieur dudit corps de confinement (100), sont logés :
- au moins un capteur (102) pour détecter les mouvements et/ou les vibrations dudit corps de confinement (100),
- au moins un capteur (103) pour détecter des variations d'orientation angulaire dudit corps de confinement (100),
- au moins une unité de traitement électronique (101) qui est connectée électroniquement auxdits capteurs (102, 103) et qui est configurée pour recevoir les données détectées par lesdits capteurs, lesdites données étant alors destinées à être exploitées par ladite unité de traitement électronique (101 ) et/ou par une unité électronique externe (200) pour identifier une altération dudit corps de confinement (100),
- des moyens de connexion sans fil (108) de ladite unité de traitement électronique (101) avec au moins une unité électronique externe (200).
et **caractérisé en ce que** ladite unité de traitement (101) dudit dispositif (2) est configurée pour que, lorsqu'elle identifie un événement déclencheur, la fréquence d'acquisition/échantillonnage soit augmentée, passant ainsi d'une première fréquence d'acquisition/échantillonnage basée sur une deuxième et fréquence d'acquisition/d'échantillonnage plus élevée, des signaux issus dudit au moins un capteur (102) pour détecter des mouvements et/ou des vibrations dudit corps de confinement (100) et issus dudit au moins un capteur (103) pour détecter des variations d'angle l'orientation dudit corps de confinement (100).

2. Dispositif selon la revendication 1, **caractérisé en ce que** :
- ledit au moins un capteur (102) de détection de mouvements et/ou de vibrations dudit corps de confinement (100) comprend un accéléromètre, de préférence à trois axes, et
- au moins un capteur (103) de détection de variations d'orientation angulaire dudit corps de confinement (100) comprend un capteur gyroscopique et/ou un magnétomètre, de préférence à trois axes.

3. Dispositif selon une ou plusieurs des revendications précédentes, **caractérisé en ce qu'**il comprend :
- au moins un capteur (104), de préférence de température et/ou de pression et/ou d'humidité et/ou de bruit acoustique, pour détecter des paramètres de l'environnement dans lequel le dispositif est installé, et/ou
- au moins un capteur (106) pour détecter la concentration de gaz nocifs dans l'air de l'environnement dans lequel le dispositif lui-même est installé et/ou à l'intérieur du corps de confinement (100) du dispositif,
et par le fait que lesdits capteurs (104, 106) pour détecter des paramètres et/ou la concentration de gaz nocifs dans l'environnement où le dispositif est installé sont logés à l'intérieur dudit corps de confinement (100) et sont connectés électroniquement à ladite unité de traitement (101) laquelle est configurée pour recevoir les données détectées par lesdits capteurs (104, 105, 106) et pour les envoyer, par l'intermédiaire desdits moyens de connexion sans fil (108), à ladite au moins une unité électronique externe (200).

4. Dispositif selon une ou plusieurs des revendications précédentes, **caractérisé en ce que**:
- comprend au moins un capteur (105), de préférence de température et de pression, pour détecter des paramètres correspondants du fluide traversant ledit passage (3), et
- ledit au moins un capteur (105) de détection de paramètres de fluide est logé à l'intérieur dudit corps de confinement (100) et est connecté électroniquement à ladite unité de traitement (101) qui est configurée pour recevoir les données détectées par ledit capteur (105) et pour envoyer eux, au moyen desdits moyens de connexion sans fil (108), à ladite au moins une unité électronique externe (200).

5. Dispositif selon une ou plusieurs des revendications précédentes, **caractérisé en ce que** ladite unité de traitement (101) dudit dispositif (2) est configurée pour :
- traiter les données issues dudit au moins un capteur (102) pour détecter des mouvements et/ou des vibrations dudit corps de confinement (100), et dudit au moins un capteur (103) pour détecter des variations d'orientation angulaire dudit confinement corps (100), pour ainsi identifier un événement et/ou une tentative d'effraction dudit corps de confinement (100),
- générer et envoyer, au moyen desdits moyens de connexion sans fil (108), un signal d'alarme correspondant à l'unité externe (200) si, sur la base du traitement effectué sur lesdites données, un événement et/ou une tentative d'effraction avec ledit corps de confinement (100) est identifié.

6. Dispositif selon une ou plusieurs des revendications précédentes, **caractérisé en ce que** ladite unité de traitement (101) dudit dispositif (2) est configurée pour:
- envoyer, au moyen desdits moyens de connexion sans fil (108), automatiquement et périodiquement, de préférence selon une fréquence prédéfinie, un signal vers ladite unité externe (200),
- traiter les données issues dudit au moins un capteur (102) pour détecter des mouvements et/ou des vibrations dudit corps de confinement (100), et dudit au moins un capteur (103) pour détecter des variations d'orientation angulaire dudit confinement corps (100), pour ainsi identifier un événement et/ou tenter d'altérer ledit corps de confinement (100),
- d'interrompre l'envoi dudit signal si, sur la base du traitement effectué sur lesdites données, un événement et/ou une tentative d'effraction dudit corps de confinement (100) est identifié.

7. Dispositif selon une ou plusieurs des revendications précédentes, **caractérisé en ce que** ladite unité de traitement (101) dudit dispositif (2) est configurée pour envoyer à l'unité externe (200), au moyen desdits moyens de connexion sans fil (108), les données provenant dudit au moins un capteur (102) pour détecter des mouvements et/ou des vibrations dudit corps de confinement (100), et dudit au moins un capteur (103) pour détecter des changements d'orientation angulaire dudit corps de confinement (100), pour permettre ainsi à ladite unité externe (200) de traiter les données ainsi reçues afin d'identifier un événement et/ou une tentative d'effraction dudit corps de confinement (100).

8. Dispositif selon une ou plusieurs des revendications précédentes, **caractérisé en ce que** ladite unité de traitement (101) dudit dispositif (2) est configurée pour :
- effectuer un premier traitement des données issues dudit au moins un capteur (102) pour détecter des mouvements et/ou des vibrations dudit corps de confinement (100), et dudit au moins un capteur (103) pour détecter des variations d'angle orientation dudit corps de confinement (100),
- envoyer, par l'intermédiaire desdits moyens de connexion sans fil (108), les données ainsi prétraitées à l'unité externe (200) pour permettre ainsi à cette dernière d'identifier, sur la base des données reçues, s'il s'est effectivement produit un événement de altération dudit corps de confinement (100).

9. Dispositif selon une ou plusieurs des revendications précédentes, **caractérisé en ce que** ladite unité de traitement (101) dudit dispositif (2) est configurée pour identifier ledit événement déclencheur en comparant des données, qui sont détectées par lesdits capteurs (102, 103) à ladite première fréquence d'acquisition/échantillonnage de base, avec au moins une valeur de seuil prédéfinie.

10. Dispositif selon une ou plusieurs des revendications précédentes, **caractérisé en ce que** ladite unité de traitement (101) dudit dispositif est configurée pour envoyer, à travers lesdits moyens de connexion sans fil (108), à l'unité électronique externe (200) détectée avec ledit deuxième fréquence d'acquisition/échantillonnage et plus élevée, pour permettre à ce dernier d'effectuer ensuite un traitement supplémentaire sur les données afin d'identifier, sur la base des données reçues, s'il y a eu effectivement un événement d'effraction dudit corps de confinement (100).

11. Dispositif selon une ou plusieurs des revendications précédentes, **caractérisé en ce que**:
- comprend, à l'intérieur dudit corps de confinement (100), des moyens de stockage (107) qui sont connectés et/ou mis en oeuvre dans l'unité de traitement (101), et
- ladite unité de traitement (101) est configurée pour stocker dans lesdits moyens de stockage (107) les données détectées par lesdits capteurs (102, 103, 104, 105, 106) et/ou éventuellement pré-traitées.

12. Dispositif selon une ou plusieurs des revendications précédentes, **caractérisé par le fait que**, dans l'unité de traitement (101) de chaque dispositif (2), est installé et exécuté un programme qui est configuré pour :
- détecter et mémoriser, au moment de l'installation du dispositif (2) sur le tronçon d'extrémité (4) dudit passage (3), les valeurs correspondantes de l'accéléromètre (102) et du capteur gyroscopique (103) pour chaque axe X, Y et Z, obtenant ainsi les données initiales Axᵢₙᵢₜ, Ayᵢₙᵢₜ, Azᵢₙᵢₜ, Gxᵢₙᵢₜ, Gyᵢₙᵢₜ, Gzᵢₙᵢₜ,
- à chaque instant d'échantillonnage "i", les données de l'accéléromètre (102) et du capteur gyroscopique (103) sont détectées pour chaque axe X, Y et Z, obtenant ainsi les données Axᵢ, Ayᵢ, Azᵢ, Gxᵢ, Gyi, Gzᵢ, et do ce qui suit:
- calculer la différence, pour chaque axe X, Y et Z, entre chaque donnée détectée à l'instant "i" et la donnée initiale correspondante et/ou la donnée correspondante détectée à l'instant précédent "i-1", obtenant ainsi la donnée suivante DAx, Jour, DAz, DGx, DGy, DGz,
- se produit, si la valeur absolue d'au moins une desdites données DAx, DAy, DAz, DGx, DGy, DGz, telle que calculée ci-dessus, est supérieure à au moins une valeur seuil prédéfinie (A_{LIMIT}, G_{LIMIT}),
- uniquement en cas de résultat positif de ce contrôle, un compteur "C" correspondant est incrémenté d'une unité,
- le compteur « C » ainsi augmenté est comparé à une valeur limite prédéfinie DECISION_LIMIT et, uniquement lorsque le compteur C est supérieur à ladite valeur limite prédéfinie DECISION_LIMIT, un signal correspondant est généré et/ou envoyé, de préférence une alarme.

13. Dispositif selon une ou plusieurs des revendications précédentes, **caractérisé en ce que** ledit corps de confinement (100) comprend :
- une chambre (9) dans laquelle la bouche de sortie (10) dudit tronçon d'extrémité (4) du passage de gaz (3) est destinée à être entièrement logée,
- une autre chambre (31), qui est séparée de ladite première chambre (9), et dans laquelle est logée une carte électronique (32) dans laquelle ladite au moins une unité de traitement électronique (101), ledit au moins un capteur (102), sont montés pour détecter les mouvements et/ou les vibrations dudit corps de confinement (100), et ledit au moins un capteur (103) pour détecter des changements d'orientation angulaire dudit corps de confinement (100).

14. Dispositif selon une ou plusieurs des revendications précédentes, **caractérisé en ce que** ledit corps de confinement (100) comprend au moins deux pièces (5, 6) qui sont pourvues de moyens d'engagement mécaniques (11) configurés pour permettre l'union mutuelle desdites au moins deux pièces (5, 6) autour dudit tronçon d'extrémité (4) et définissent ainsi un boîtier (8) qui est fixé, de préférence suspendu, audit tronçon d'extrémité (4), et dans lequel :
- ladite boîtier (8) comporte en son intérieur une chambre (9) dans laquelle est destinée à être entièrement logée l'embouchure de sortie (10) dudit passage (3) du tronçon d'extrémité (4),
- lesdits moyens d'engagement mécanique (11) sont obtenus dans lesdites au moins deux pièces (5, 6) et sont configurés de telle sorte qu'une fois ledit engagement mécanique défini/activé et ainsi assemblé lesdites au moins deux pièces (5, 6) , lesdites au moins deux pièces (5, 6) ne peuvent être désassemblées que par rupture, au moins partielle, ou par endommagement visible et permanent desdites au moins deux pièces (5, 6) et/ou desdits moyens mécaniques d'engagement (11).

15. Infrastructure (250) de contrôle de l'état de fermeture effective/correcte réalisée sur une pluralité de tronçons d'extrémité (4) de passages (3) d'un fluide, tel que gaz, eau ou autre liquide en général, de préférence de conduits de refoulement du fluide préalablement fermé et étanche, **caractérisé par** le fait de comprendre :
- une pluralité de dispositifs (2) selon une ou plusieurs des revendications précédentes, chacun desdits dispositifs (2) étant installé en correspondance avec une section d'extrémité (4) dudit passage (3),
et en ce que lesdits appareils (2) sont reliés à au moins une unité externe (200), de préférence déportée, qui est reliée sans fil à ladite au moins une unité de traitement (101) de chacun desdits appareils (2), ladite unité externe (200) est configuré pour :
- recevoir les données, éventuellement prétraitées par ladite unité de traitement (101) d'au moins un dispositif, issues des capteurs (102, 103) du dispositif correspondant (2), et traiter les données ainsi reçues pour ainsi identifier un événement et/ou une tentative d'effraction avec le corps de confinement (100) du dispositif correspondant (2) qui a envoyé lesdites données, et/ou
- recevoir les signaux d'alarme générés et émis par au moins un dispositif (2) qui, sur la base du traitement effectué sur les données issues des capteurs (102, 103) du dispositif correspondant (2), a identifié un événement et/ou tentative de falsification de son corps de confinement (100).
